# EUROPÄISCHE PATENTANMELDUNG

(11) **EP 2 524 822 A2**
(43) Veröffentlichungstag der Anmeldung: **21.11.2012**
(21) Anmeldenummer: 12003941.7
(22) Anmeldetag: 18.05.2012
(51) Int. Cl.: B60D 1/06, B60D 1/46

(54) **Höhenverstellbare Anhängerkupplung**

(30) Priorität: 20.05.2011 DE 202011101206 U
(71) Anmelder: Sauermann, Hans, 86558 Freinhausen (DE)
(72) Erfinder: Sauermann, Hans, 86558 Freinhausen (DE)
(74) Vertreter: Witzany, Manfred

(57) **Zusammenfassung**

Eine höhenverstellbare Anhängerkupplung (1) für ein Fahrzeug weist mindestens einen verschiebbaren Träger (4) auf. Dieser Träger (4) trägt mindestens ein Kupplungsglied (8) und ist zwischen Führungsschienen (2) geführt. In diesen Führungsschienen (2) sind Vertiefungen oder Bohrungen (3) vorgesehen, in die Sperrbolzen (5) eingreifen können. Diese Sperrbolzen (5) sind zwischen einer Lösestellung, in der der Träger (4) verstellbar ist, und einer Arretierstellung verstellbar gehalten. Zur Erhöhung der Sicherheit der Arretierung des Trägers (4) sind beide Sperrbolzen (5) unabhängig voneinander bewegbar. Zu diesem Zweck weisen sie in ihren innenseitigen Endbereichen (11) jeweils mindestens eine Handhabe (12) zum unmittelbaren und unabhängigen Verstellen auf.

## Beschreibung

Die Erfindung betrifft eine höhenverstellbare Anhängerkupplung gemäß dem Oberbegriff des Patentanspruchs 1.

Aus der EP 0 578 072 ist eine höhenverstellbare Einrichtung für eine Anhängerkupplung eines Ackerschleppers bekannt. Diese besteht aus einem Träger, der zwischen zwei Führungsschienen geführt ist. In den Führungsschienen sind Vertiefungen in Form von Sackbohrungen vorgesehen, in die ein Sperrbolzen eindringen kann. Dieser Sperrbolzen ist an beiden Endbereichen abgefräst, so dass er entlang der Führungsschienen gleiten kann. Durch Verdrehen des Sperrbolzens um seine Längsachse kann seine Abfräsung quergestellt werden, so dass der Sperrbolzen die Sackbohrungen der Führungsschiene verriegelt. Auf diese Weise wird eine weitere Verschiebung des Trägers unterbunden. Um den Sperrbolzen zu sichern, ist ein Verriegelungsbolzen vorgesehen, der in einer Bohrung des Sperrbolzens eingreift und eine Drehung des Sperrbolzens verhindert. Diese höhenverstellbare Kupplung hat sich in der Praxis gut bewährt und bildet den Ausgangspunkt der vorliegenden Erfindung.

Der Erfindung liegt die Aufgabe zugrunde, eine höhenverstellbare Anhängerkupplung der eingangs genannten Art zu schaffen, die sich durch eine erhöhte Sicherheit auszeichnet.

Diese Aufgabe wird erfindungsgemäß mit den Merkmalen des Patentanspruchs 1 gelöst.

Die Anhängerkupplung gemäß Anspruch 1 weist mindestens einen verschiebbaren Träger auf, der mindestens ein Kupplungsglied trägt. Es ist dabei unerheblich, wie dieses Kupplungsglied ausgebildet ist. Der Träger ist zwischen Führungsschienen verschiebbar geführt, so dass er nur eine im Wesentlichen vertikale Bewegung ausführen kann. In den Führungsschienen sind Vertiefungen vorgesehen, in die Sperrbolzen eingreifen können. Diese Sperrbolzen sind dabei zwischen einer den Träger freigebenden Lösestellung und einer in die Vertiefung eingreifenden Arretierstellung verstellbar. Um den Träger in seiner Höhenlage verstellen zu können, müssen beide unabhängig wirkenden Sperrbolzen in ihre Lösestellung gebracht werden. Anderenfalls bleibt der Träger arretiert. Wird einer der Sperrbolzen versehentlich in seine Freigabestellung verstellt, verbleibt somit der Träger in seiner arretierten Lage und es geht keine Gefahr von ihm aus. An beiden Sperrbolzen ist jeweils am innenseitigen Endbereich mindestens eine Handhabe vorgesehen, über die der jeweilige Sperrbolzen verstellt werden kann. Beide Sperrbolzen sind damit unabhängig voneinander bewegbar. Auf diese Weise wird eine Zweihandbedienung der Sperrbolzen realisiert, welche die Sicherheit der bedienenden Person erheblich erhöht. Insbesondere kann es auf diese Weise nicht vorkommen, dass die bedienende Person eine Hand unterhalb des Trägers hält, während der Träger verschiebbar ist. Dieser Zustand kann zu erheblichen Quetschverletzungen führen und wird durch die besondere Ausbildung der Sperrbolzen verhindert. Um die Sperrbolzen in ihrer Arretierstellung zu halten, sind im Träger mindestens zwei Verriegelungsbolzen vorgesehen, die jeweils einem der Sperrbolzen zugeordnet sind. Diese sind ebenfalls unabhängig voneinander verstellbar. Sie können zwischen einer den Sperrbolzen freigebenden Entriegelungsstellung und einer den Sperrbolzen in seiner Arretierstellung haltenden Verriegelungsstellung verstellt werden. Die Verriegelungsbolzen wirken wiederum unabhängig voneinander, wodurch die Sicherheit der höhenverstellbaren Anhängerkupplung verbessert wird.

Gemäß Anspruch 2 ist es günstig, wenn der Verriegelungsbolzen bzw. der Sperrbolzen verschiebbar ist. Da die beiden Sperrbolzen unhabhängig voneinander bewegbar sind, ist eine gegenläufige Bewegung nach innen bzw. außen problemlos realisierbar. Insbesondere müssen hierzu keine komplizierten Getriebeelemente vorgesehen werden. Die Bolzen sind jeweils in entsprechenden Bohrungen geführt, so dass auf diese Weise eine einfache Schiebeführung realisiert ist. Die Sperrbolzen greifen in der Arretierstellung vorzugsweise in die Sackbohrung ein, während sie in der Lösestellung in den Träger zurückgezogen sind. Die Verriegelungsbolzen können hinter den jeweiligen Sperrbolzen greifen, um diesen zu arretieren. Alternativ kann der Verriegelungsbolzen auch eine radiale Nut oder eine Querbohrung des Sperrbolzens durchsetzen.

Alternativ ist es gemäß Anspruch 3 günstig, wenn der Verriegelungsbolzen bzw. der Sperrbolzen verdrehbar ausgebildet ist. Hierzu ist es erforderlich, dass dieser eine nicht rotationssymmetrische Form aufweist. Ein Verdrehen des Bolzens ist recht einfach realisierbar. Nachteilig ist allerdings, dass der Bolzen nicht rotationssymmetrisch ausgebildet werden kann und somit in seiner Herstellung kostenintensiver ist.

Zur Bildung eines möglichst einfachen Aufbaus ist es gemäß Anspruch 4 vorteilhaft, wenn die Verriegelungsbolzen in ihrer Verriegelungsstellung hinter den Sperrbolzen greifen. Damit müssen die Sperrbolzen im Eingriffsbereich der Verriegelungsbolzen nicht in besonderer Weise ausgebildet sein.

Alternativ ist es gemäß Anspruch 5 günstig, wenn die Sperrbolzen mindestens eine radiale Vertiefung bzw. Nut aufweisen, in die die Verriegelungsbolzen greifen können. Auf diese Weise ergibt sich eine günstige Arretierung der Sperrbolzen in beiden Richtungen, so dass von einem Anschlag der Sperrbolzen im Bereich der Führungsschienen abgesehen werden kann.

Zur Erhöhung der Sicherheit der Anhängerkupplung ist es gemäß Anspruch 6 vorteilhaft, wenn die Verriegelungsbolzen federnd gegen die Sperrbolzen vorgespannt sind. Auf diese Weise wird zusätzlich vermieden, dass sich die Verriegelungsbolzen selbsttätig und unbeabsichtigt in ihre Entriegelungsstellung bewegen.

Um die Verriegelungsbolzen leicht verstellen zu können, ist es gemäß Anspruch 7 günstig, wenn die Verriegelungsbolzen an ihren dem Sperrbolzen gegenüberliegenden Endbereichen mindestens eine zweite Handhabe aufweisen. An dieser zweiten Handhabe können die Verriegelungsbolzen leicht ergriffen und in ihre Entriegelungsstellung überführt werden.

Der Erfindungsgegenstand wird beispielhaft anhand der Zeichnung erläutert, ohne den Schutzbereich zu beschränken.

Es zeigt:
- Figur 1: eine räumliche Darstellung einer höhenverstellbaren Anhängerkupplung,
- Figur 2: eine räumliche Darstellung eines Trägers der Anhängerkupplung gemäß Figur 1 und
- Figur 3: eine zugeordnete Schnittdarstellung durch den Träger gemäß Figur 2 entlang der Schnittlinie III-III.

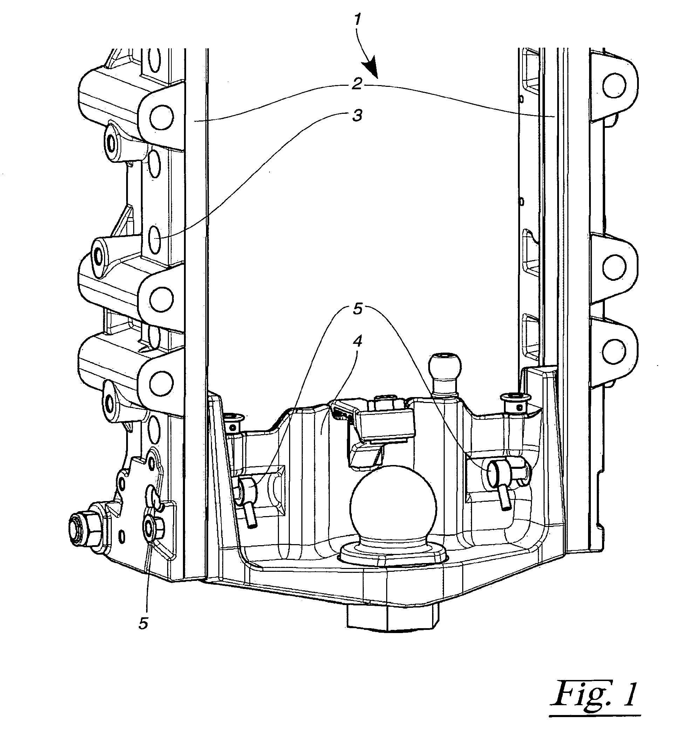

Eine höhenverstellbare Anhängerkupplung 1 gemäß Figur 1 weist zwei zueinander gerichtete, fahrzeugfeste Führungsschienen 2 auf. In diesen Führungsschienen 2 ist eine Reihe von Bohrungen 3 vorgesehen. Zwischen den Führungsschienen 2 ist ein Träger 4 vertikal verstellbar gehalten. Dieser Träger 4 weist zwei Sperrbolzen 5 auf, die in die Bohrungen 3 eingreifen können.

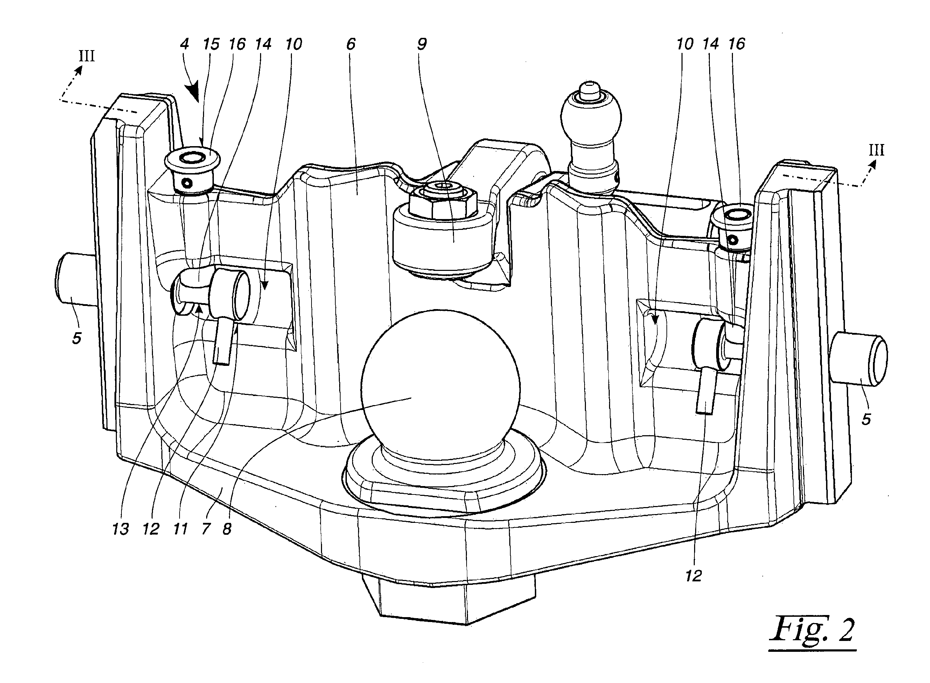

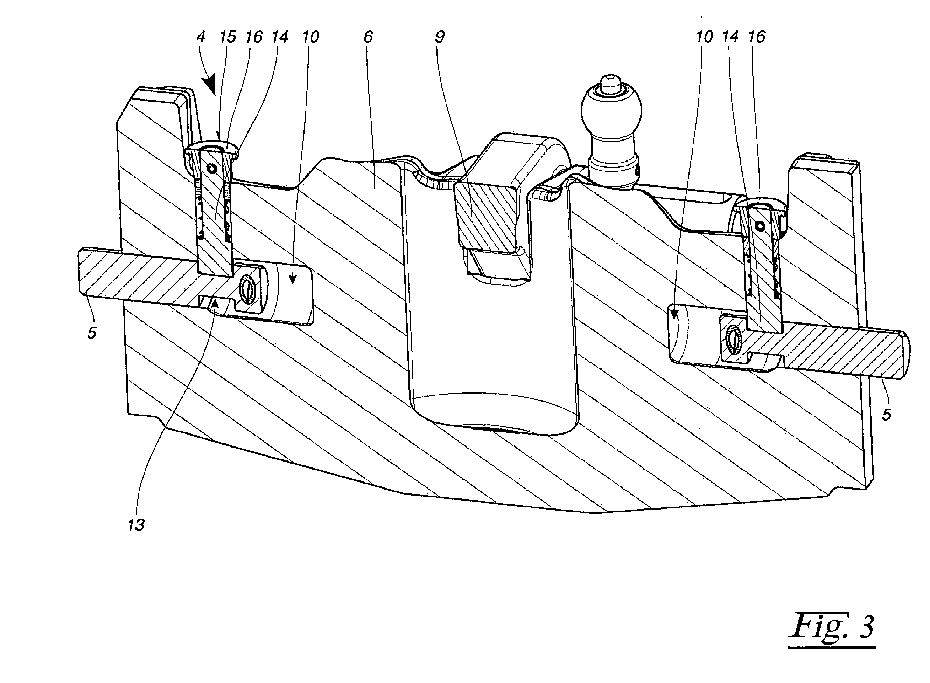

Die weitere Beschreibung erfolgt anhand der räumlichen Darstellung gemäß Figur 2 sowie der zugeordneten Schnittdarstellung gemäß Figur 3.

Der Träger 4 besteht im Wesentlichen aus einem L-förmigen Winkel, dessen vertikaler Schenkel 6 im Wesentlichen zwischen den Führungsschienen 2 liegt. Sein horizontaler Schenkel 7 trägt ein Kupplungsglied 8 in Form eines Kugelkopfes. Dem Kupplungsglied 8 ist ein Niederhalter 9 zugeordnet, der für eine sichere Verbindung mit einer anhängerseitigen Kugelkalotte sorgt.

Im Träger 4 sind Bohrungen 10 vorgesehen, in denen die beiden Sperrbolzen 5 unabhängig voneinander bewegbar sind. In der in den Figuren 2 und 3 dargestellten Arretierstellung dringen die Sperrbolzen 5 in die Bohrungen 3 der Führungsschienen 2 ein und arretieren damit den Träger 4 gegenüber einer Höhenverstellbarkeit.

Im Bereich ihres innenseitigen Endes 11 weisen die Sperrbolzen 5 Handhaben auf. Mit Hilfe dieser Handhaben 12 können die Sperrbolzen 5 unmittelbar und unabhängig voneinander axial verschoben werden.

Um die Sperrbolzen 5 an einem unbeabsichtigten Verschieben in eine nach innen zurückgezogene Lösestellung zu hindern, weisen die Sperrbolzen 5 radiale Nuten 13 auf. In diese radialen Nuten 13 greifen Verriegelungsbolzen 14, die ebenfalls axial verstellbar sind. Diese Verriegelungsbolzen 14 befinden sich in den Figuren 2 und 3 in ihrer Verriegelungsstellung. Sie sind auch oben in eine Entriegelungsstellung 8 axial verschiebbar.

Um die Verriegelungsbolzen 14 betätigen zu können, weisen sie an ihren oberen Enden 15 zweite Handhaben 16 auf. Die Verriegelungsbolzen 14 sind federnd gegen die Sperrbolzen 5 vorgespannt. Durch Betätigen der zweiten Handhabe 16 werden diese entgegen dieser Federkraft nach oben bewegt, bis sie in den Nuten 13 der Sperrbolzen 5 vollständig herausgetreten sind und ihre Entriegelungsstellung erreichen.

In dieser Entriegelungsstellung der Verriegelungsbolzen 14 können die Sperrbolzen 5 mit Hilfe der Handhabe 12 axial verschoben werden, um sie außer Eingriff mit den Bohrungen 3 der Führungsschienen 2 zu bringen. Nachdem dies bei beiden Verriegelungsbolzen 14 und Sperrbolzen 5 vorgenommen wurde, ist der Träger 4 gegenüber den Führungsschienen 2 vertikal verschiebbar.

Nun kann der Träger 4 in die gewünschte Höhenlage verschoben werden. Anschließend werden die beiden Sperrbolzen 5 wieder axial nach außen verschoben, so dass sie in eine andere Bohrung 3 der Führungsschiene 2 eingreifen. Bedingt durch die federnde Vorspannung der Verriegelungsbolzen 14 geraten diese selbsttätig wieder in Eingriff mit den Nuten 13 der Sperrbolzen 5.

### Bezugszeichenliste

- 1: höhenverstellbare Anhängerkupplung
- 2: Führungsschiene
- 3: Bohrung
- 4: Träger
- 5: Sperrbolzen
- 6: vertikaler Schenkel
- 7: horizontaler Schenkel
- 8: Kupplungsglied
- 9: Niederhalter
- 10: Bohrung
- 11: innenseitiges Ende
- 12: Handhabe
- 13: radiale Nut
- 14: Verriegelungsbolzen
- 15: oberes Ende
- 16: Handhabe

## Patentansprüche

1. Höhenverstellbare Anhängerkupplung für ein Fahrzeug, wobei die Anhängerkupplung (1) mindestens einen verschiebbaren Träger (4) aufweist, der mindestens ein Kupplungsglied (8) trägt und zwischen Führungsschienen (2) geführt ist, in denen Vertiefungen oder Bohrungen (3) vorgesehen sind, in die Sperrbolzen (5) eingreifen können, welche am Träger (4) zwischen einer eine Verstellung des Trägers (4) ermöglichenden Lösestellung und einer in die Vertiefungen oder Bohrungen (3) eingreifenden Arretierstellung verstellbar gehalten sind, **dadurch gekennzeichnet, dass** beide Sperrbolzen (5) unabhängig voneinander bewegbar sind und an ihren innenseitigen Endbereichen (11) jeweils mindestens eine Handhabe (12) zum unmittelbaren und unabhängen Verstellen der Sperrbolzen (5) aufweisen, und im Träger (4) mindestens zwei Verriegelungsbolzen (14) unabhängig voneinander verstellbar gehalten sind, die relativ zu jedem der Sperrbolzen (5) zwischen einer den jeweiligen Sperrbolzen (5) freigebenden Entriegelungsstellung und einer den jeweiligen Sperrbolzen (5) in seiner Arretierstellung haltenden Verriegelungsstellung verstellbar sind.

2. Anhängerkupplung nach Anspruch 1, **dadurch gekennzeichnet, dass** mindestens einer der Verriegelungsbolzen (14) und/oder Sperrbolzen (5) axial verschiebbar ist.

3. Anhängerkupplung nach Anspruch 1 oder 2, **dadurch gekennzeichnet, dass** mindestens einer der Verriegelungsbolzen (14) und/oder Sperrbolzen (5) verdrehbar ist und eine nicht rotationssymmetrische Form aufweist.

4. Anhängerkupplung nach mindestens einen der Ansprüche 1 bis 3, **dadurch gekennzeichnet, dass** der Verriegelungsbolzen (14) in seiner Verriegelungsstellung innenseitig hinter den zugeordneten Sperrbolzen (5) greift.

5. Anhängerkupplung nach mindestens einen der Ansprüche 1 bis 3, **dadurch gekennzeichnet, dass** mindestens einer der Sperrbolzen (5) mindestens eine radiale Vertiefung und/oder Nut (13) aufweist, in die der mindestens eine Verriegelungsbolzen (14) greifen kann.

6. Anhängerkupplung nach mindestens einen der Ansprüche 1 bis 5, **dadurch gekennzeichnet, dass** der mindestens eine Verriegelungsbolzen (14) federnd gegen den Sperrbolzen (5) vorgespannt ist.

7. Anhängerkupplung nach mindestens einen der Ansprüche 1 bis 6, **dadurch gekennzeichnet, dass** der mindestens eine Verriegelungsbolzen (14) an seinem dem Sperrbolzen (5) gegenüberliegenden Endbereich (15) mindestens eine zweite Handhabe (16) aufweist.
